# EUROPÄISCHE PATENTSCHRIFT

(11) **EP 1 354 900 B1**
(45) Veröffentlichungstag und Bekanntmachung des Hinweises auf die Patenterteilung: **24.03.2004**
(21) Anmeldenummer: 03007422.3
(22) Anmeldetag: 03.04.2003
(51) Int. Cl.: C08F 290/14, C09D 151/08

(54) **Extrudierbare, migrationsarme Silikonorganocopolymere mit hoher Transparenz, deren Herstellung und Verwendung**
Extrudable silicon organo copolymers with low migration and high tranparency, their preparation and their use
Copolymères organosiliciques extrudables à faible migration et haute transparence, leur préparation et utilisation

(30) Priorität: 15.04.2002 DE 10216608
(43) Veröffentlichungstag der Anmeldung: 22.10.2003
(73) Patentinhaber: Wacker Polymer Systems GmbH & Co. KG, 84489 Burghausen (DE)
(72) Erfinder: Stark, Kurt. Dr., 84508 Burgkirchen (DE)
(74) Vertreter: Schuderer, Michael, Dr.

(56) Entgegenhaltungen:
- EP-A- 1 059 336
- US-A- 5 219 560
- US-B1- 6 180 741

## Beschreibung

Die Erfindung betrifft extrudierbare, migrationsarme Silikonorganocopolymere mit hoher Transparenz, deren Herstellung und Verwendung.

Für die Herstellung von abhäsiven Beschichtungen werden härtbare Polyorganosiloxane auf Trägermaterialen aufgebracht und anschließend unter Zuführ thermischer Energie oder durch Strahlung gehärtet. Die Härtung des Beschichtungsmaterials ist häufig der geschwindigkeitsbestimmende Schritt bei der Herstellung von abhäsiven Trägermaterialien. Zusätzlich ist die Installation von Trockenöfen, UV- oder IR-Lampen notwendig. Deren Betrieb ist außerdem energieintensiv. Daher sind neuere Entwicklungen darauf ausgerichtet, Beschichtungsmaterialien zur Verfügung zu stellen, die auf diesen Härtungsschritt verzichten können.

Die EP-A 168624 beschreibt die Coextrusion von PP-Trägerfolien mit einer klebstoffabweisenden Schicht, welche Polydimethylsiloxan enthält. Gegenstand der EP-A 541103 ist das Coating von laminierten PET-Filmen durch Aufbringen von Emulsionen von Polysiloxan-Polyvinyl-Pfropfpolymeren, wobei die Polysiloxankomponente aus einem cyclischen Siloxan und einem Siloxan mit einer radikalisch polymerisierbaren Gruppe besteht, in deren Gegenwart die Vinylmonomeren polymerisiert werden. Die EP-A 254050 beschreibt die Herstellung eines Releaseliners durch Aufextrudieren eines Reaktionsproduktes aus H-Siloxan und einer Kohlenwasserstoff-Verbindung mit mindestens einer ethylenisch ungesättigten Gruppe.

Aus der US-A 5086141 ist ein vernetztes Polysiloxan-Styrol/-Butadien-Copolymer bekannt, welches durch Polymerisation von Styrol und Butadien in Gegenwart von difunktionellem Polysiloxan erhalten wird. Die WO-A 96/39459 beschreibt Blockcopolymere aus Ethylen und cyclischen Siloxan-Monomeren, welche sich in der Coextrusion für Releaseliners einsetzen lassen. In Abmischung mit HDPE lassen sich Releaseliner mit guten abhäsiven Eigenschaften erzielen. Aus der WO-A 95/00578 sind durch Coextrusion hergestellte Copolymere aus monofunktionellen Siliconen und funktionalisierten Polyolefinen bekannt, welche als Releasematerial verwendet werden können. Die WO-A 91/15538 beschreibt Releasefilme aus einem Basispolymer und einem Siliconcopolymer, welches aus einem Organopolymer-Hartsegment und einem Polydialkylsiloxan-Weichsegment aufgebaut ist. Dieses Copolymer wird dem Basispolymer als Additiv zugesetzt.

Die EP-A 352339 beschreibt Schutzanstriche für Betonkonstruktionen, welche Copolymerisate von Divinyl-Polydimethylsiloxan mit Acrylat- bzw. Methacrylatestern und mit Vinyl- bzw. Acrylfunktionellen Alkoxysilanen als Lösung in organischen Lösungsmitteln enthalten. Wärmehärtbare Acrylharzlösungen in organischen Lösungsmitteln, welche zur Beschichtungen von Metallen, insbesondere Edelstahl, eingesetzt werden, sind Gegenstand der EP-A 159894. Zur Verbesserung der Metallhaftung, insbesondere zur Verhinderung des Abblätterns der Beschichtung bei Verformung der beschichteten Metallteile, werden Acrylharzlösungen eingesetzt, von Copolymerisaten aus (Meth)acrylat, hydroxyoder epoxyfunktionellem (Meth)acrylat, vinylfunktionellem Polysiloxan und vinylfunktionellem Silan. Zur Haftungsverbesserung werden die Polymerisate mittels organischen Zinnverbindungen als Vernetzungskatalysatoren nachvernetzt und thermisch ausgehärtet.

Aus der US-A 3879491 sind modifizierte Thermoplasten bekannt, welche durch Polymerisation von ethylenisch ungesättigten Monomere in Gegenwart von Polydiorganosiloxanen erhalten werden. Die US-A 4985155 betrifft ein Mittel zur Textilbehandlung auf Basis eines Pfropfcopolymerisats, erhältlich durch Polymerisation von Acrylaten oder Methacrylaten in Gegenwart eines Polydiorganosiloxans, welches Einheiten mit ethylenisch ungesättigter Doppelbindung enthält. Die DE-A 3706095 beschreibt die Herstellung von Polysiloxan-Einheiten enthaltenden Harzen durch Polymerisation eines Vinylmonomers in Gegenwart eines mit Doppelbindungen funktionalisierten Polysiloxans, welches mindestens zwei funktionelle Gruppen, Hydroxid und/oder Amin, enthält.

Die DE-A 10064092 betrifft Polyorganosiloxane zur Herstellung abhäsiver Beschichtungen, welche ohne Zufuhr von thermischer Energie oder Strahlung aushärten. Es handelt sich dabei um Silikonblockcopölymere aus einer vernetzbaren Hartsegment-Polymerkomponente und einer Weichsegment-Polyorganosiloxan-Komponente. Diese Silikonblockcopolymere werden durch Kopplungsreaktion der Blocksegmente oder durch Polymerisation der Hartsegment-Komponente in Gegenwart von Polyorganosiloxan hergestellt.

Die bisher bekannten Produkte zeigen jedoch häufig unbefriedigende abhäsive Eigenschaften, Migration von Silikon aus der Releaseschicht, geringe Substrathaftung oder schlechte synthetische Zugänglichkeit. Überdies besitzen sie oft keine Transparenz, da die Silikonkomponente und die organische Polymerkomponente unverträglich sind, was zu einer Domänenbildung bzw. Phasenseparation führen kann. Die bekannten'Produkte können des weiteren oft nicht mittels Extrusion appliziert werden. Häufig sind die beschriebenen Siliconorganocopolymere zu stark vernetzt und nicht mehr thermoplastisch verarbeitbar.

Es bestand daher die Aufgabe, extrudierbare, migrationsarme Siliconorganocopolymere mit hoher Transparenz bereitzustellen, die zur Herstellung von abhäsiven Überzügen geeignet sind und mit denen die vorstehend genannten Nachteile vermieden werden.

Gegenstand der Erfindung sind Silikonorganocopolymere enthaltend
a) 30 bis 99 Gew.-%, bezogen auf das Gesamtgewicht der Komponenten a) und b), von einem oder mehreren Monomeren aus der Gruppe umfassend Vinylaromaten, Methacryl- oder Acrylsäureester von Alkoholen mit 1 bis 15 C-Atomen, Vinylester von unverzweigten oder verzweigten Alkylcarbonsäuren mit 1 bis 15 C-Atomen, Olefine, Diene, Vinylhalogenide
b) 1 bis 70 Gew.-%, bezogen auf das Gesamtgewicht der Komponenten a) und b), einer Silikonkomponente, die aus einer Mischung von mindestens zwei Diorganopolysiloxanen mit der allgemeinen Formel R¹ₐR₃₋ₐSiO(SiR₂O)ₙSiR₃₋ₐR¹ₐ besteht, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a gleich oder verschieden ist und 0 oder 1 bedeutet, wobei mindestens ein a gleich 1 ist, und n eine ganze Zahl ist, wobei
   b1) 5 bis 65 Gew.-% der Silikonkomponente b) aus einem oder mehreren Diorganopolysiloxanen bestehen mit n ≤ 30 und nur einer endständigen polymerisierbaren Gruppe R¹, und
   b2) 35 bis 95 Gew.-% der Silikonkomponente b) aus einem oder mehreren Diorganopolysiloxanen bestehen, mit n ≥ 55 und mit einer bis zwei endständigen polymerisierbaren Gruppen R¹.

Die Angaben in Gew.-% addieren sich dabei jeweils auf 100 Gew.-% auf.

Geeignete Methacrylsäureester oder Acrylsäureester a) sind beispielsweise Methylacrylat, Methylmethacrylat, Ethylacrylat, Ethylmethacrylat, Propylacrylat, Propylmethacrylat, n-, isound t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat.

Geeignete Vinylester a) sind Vinylester von unverzweigten oder verzweigten Alkylcarbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 11 C-Atomen, beispielsweise VeoVa9^{R} (Vinylester einer α-verzweigten Monocarbonsäure mit 9 C-Atomen)oder VeoVa10^{R} (Vinylester einer α-verzweigten Monocarbonsäure mit 10 C-Atomen), (Handelsnamen der Firma Shell). Besonders bevorzugt ist Vinylacetat.

Geeignete Vinylaromaten a) sind beispielsweise Styrol oder α-Methylstyrol. Bevorzugt ist Styrol. Geeignete Olefine und Diene a) sind Ethylen, Propylen, 1,3-Butadien und Isopren. Bevorzugt ist Ethylen. Ein geeignetes Vinylhalogenid a) ist Vinylchlorid.

Gegebenenfalls können noch 0.01 bis 20 Gew.-%, vorzugsweise 0.01 bis 5 Gew.-%, jeweils bezogen auf das Gesamtgewicht der eingesetzten Monomere a), Hilfsmonomere copolymerisiert werden. Beispiele für Hilfsmonomere sind Acryl- und Methacrylsäure. Weitere Hilfsmonomere sind ethylenisch ungesättigte Monocarbonsäuren wie Crotonsäure, und Dicarbonsäuren wie Fumarsäure und Maleinsäure; ethylenisch ungesättigte Carbonsäureamide und - nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Als weitere Hilfsmonomere können polymerisierbare Epoxide, wie Glycidylacrylat, Glycidylmethacrylat, Allylglycidether, Vinylglycidether, Vinylcyclohexenoxid, Limonenoxid, Myrcenoxid, Caryophyllenoxid eingesetzt werden. Bevorzugt werden Glycidylacrylat, Glycidylmethacrylat, Allylglycidether, Vinylglycidether eingesetzt werden.

Ferner können geeignete hydrolysierbare Siliciumverbindungen als Hilfsmonomere verwendet werden. Bevorzugt sind ethylenisch ungesättigte und damit copolymerisierbare Siliciumverbindungen der allgemeinen Formel R³SiR²₀₋₂(OR⁴)₁₋₃, wobei R² die Bedeutung C₁- bis C₃-Alkylrest, C₁- bis C₃-Alkoxyrest oder Halogen (z.B. Cl oder Br) hat, R³ die Bedeutung CH₂=CR³-(CH₂)₀₋₁ oder CH₂=CR⁵CO₂(CH₂)₁₋₃ hat, R⁴ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R⁴ gegebenenfalls durch eine Ethergruppe unterbrochen sein kann, und R⁵ für H oder CH₃ steht.

Bevorzugt sind γ-Acryl- bzw. γ-Methacryloxypropyltri(alkoxy)silane, α-Methacryloxymethyltri(alkoxy)silane, γ-Methacryloxypropylmethyldi(alkoxy)silane, Vinylalkyldi(alkoxy)silane und Vinyltri(alkoxy)silane, wobei als Alkoxygruppen beispielsweise Methoxy-, Ethoxy-, Methoxyethylen-, Ethoxyethylen-, Methoxypropylenglykolether- und Ethoxypropylenglykolether-Reste eingesetzt werden können. Beispiele für geeignete Siliciumverbindungen sind Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, 3-Methacryloxypropyltrimethoxysilan, 3-Methacryloxypropylmethyldimethoxysilan, Methacryloxymethyltrimethoxysilan, 3-Methacryloxypropyl-tris(2-methoxyethoxy)silan, Vinyltrichorsilan, Vinylmethyldichlorsilan, Vinyltris-(2-methoxyethoxy)silan, Trisacetoxyvinylsilan, 3-(Triethoxysilyl)propylbernsteinsäureanhydridsilan.

Geeignet sind auch funktionalisierte, hydrolysierbare Siliciumverbindungen aus der Gruppe der Epoxysilane und Aminosilane, die während der Polymerisation zugegeben werden, wie Glycidoxypropyltrimethoxysilan, Glycidoxypropyltriethoxysilan, 3-(2-Aminoethylamino)propyltrimethoxysilan, 3-(2-Aminoethylamino)-propylmethyldimethoxysilan.

Geeignete Silanverbindungen sind insbesondere auch kettenübertragend wirkende Mercaptosilane der allgemeinen Formel HS-(CR⁶₂)₁₋₃ -SiR⁷₃, wobei R⁶ gleich oder verschieden ist und die Bedeutung H und C₁- bis C₆-Alkylgruppe, R⁷ gleich oder verschieden ist und die Bedeutung C₁- bis C₆-Alkylgruppe und C₁- bis C₆-Alkoxygruppe hat, wobei mindestens einer der Reste R⁷ eine Alkoxygruppe ist. Bevorzugt werden 3-Mercaptopropyltriethoxysilan, 3-Mercaptopropyltrimethoxysilan und 3-Mercaptopropylmethyldimethoxysilan.

Als Silan-Hilfsmonomere werden am meisten bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-(Triethoxysilyl)propyl-bernsteinsäureanhydridsilan, 3-Mercaptopropyltrimethoxysilan, Glycidoxypropyltrimethoxysilan, Glycidoxypropyltriethoxysilan, 3-Methacryloxypropyltrimethoxysilan, 3-Methacryloxypropylmethyldimethoxysilan und Methacryloxymethyltrimethoxysilan sowie deren Gemische.

Weitere Beispiele für Hilfsmonomere sind vorvernetzende Comonomere wie mehrfach ethylenisch ungesättigte Comonomere, beispielsweise Divinyladipat, Divinylbenzol, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids sowie des N-Methylolmethacrylamids und des N-Methylolallylcarbamats.

Am meisten bevorzugt als Komponente a) werden Homo- und Mischpolymerisate von Styrol und von Methacrylsäureestern und Acrylsäureestern von Alkoholen mit 1 bis 15 C-Atomen wie Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat, welche gegebenenfalls noch die obengenannten Hilfsmonomere in den genannten Mengen enthalten.

Die erfindungsgemäßen Silikonorganocopolymere enthalten die Silikonkomponente b) in Mengen von 1 bis 70 Gew.-%, bevorzugt 3 bis 50 Gew.-%, besonders bevorzugt 5 bis 40 Gew.-%, jeweils bezogen auf das Gesamtgewicht des Silikonorganocopolymers. Die erfindungsgemäßen Silikonorganocopolymere besitzen ein gewichtsmittleres Molekulargewicht (M_{w}) von 1000 bis 2000000, bevorzugt von 5000 bis 1000000, besonders bevorzugt von 10000 bis 800000.

Im allgemeinen sind die Silikone b) lineare oder verzweigte Diorganopolysiloxane mit einer Kettenlange n von 2 bis 3000, wobei Silikone b1) mit einer mittleren Kettenlänge ≤ 30, vorzugsweise 2 bis 25, besonders bevorzugt 5 bis 20, und Silikone b2) mit einer mittleren Kettenlänge ≥ 55, vorzugsweise 55 bis 1000, besonders bevorzugt 60 bis 500 essentieller Bestandteil sind.
Die Silikone b1) enthalten nur eine endständige polymerisierbare Gruppe, die Silikone b2) enthalten ebenfalls bevorzugt nur eine endständige polymerisierbare Gruppe, wobei aber für die Silikone b2) auch Mischungen von mono- und difunktionellen Verbindungen eingesetzt werden können.

In der allgemeinen Formel R¹ₐR₃₋ₐSiO(SiR₂O)ₙSiR₃₋ₐR¹ₐ sind Beispiele für Reste R Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste wie der n-Hexylrest, Heptylreste wie der n-Heptylrest, Octylreste wie der n-Octylrest und iso-Octylreste wie der 2,2,4-Trimethylpentylrest, Nonylreste wie der n-Nonylrest, Decylreste wie der n-Decylrest, Dodecylreste wie der n-Dodecylrest, und Octadecylreste wie der n-Octadecylrest, Cycloalkylreste wie Cyclopentyl-, Cyclohexyl-, Cycloheptyl- und Methylcyclohexylreste. Bevorzugt handelt es sich bei dem Rest R um einen einwertigen Kohlenwasserstoffrest mit 1 bis 6 Kohlenstoffatomen, wie Methyl-, Ethyl-, n-Propyl-, Isopropyl-, n-Butyl-, sec-Butyl, Amyl- und Hexyl-Rest, wobei der Methylrest besonders bevorzugt ist.

Bevorzugte Alkoxyreste R sind solche mit 1 bis 6 Kohlenstoffatomen wie Methoxy-, Ethoxy-, Propoxy- und n-Butoxyrest, welche gegebenenfalls noch mit Oxyalkylenresten wie Oxyethylen- oder Oxymethylen-Resten substituiert sein können. Besonders bevorzugt werden der Methoxy- und Ethoxyrest. Die genannten Alkylreste und Alkoxyreste R können gegebenenfalls auch substituiert sein, beispielsweise mit Halogen, Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Alkoxysilylgruppen und Hydroxygruppen.

Geeignete polymerisierbare Gruppen R¹ sind Alkenylreste mit 2 bis 8 C-Atomen. Beispiele für solche polymerisierbare Gruppen sind die Vinyl-, Allyl-, Butenyl-, sowie Acryloxyalkyl- und Methacryloxyalkyl-Gruppe, wobei die Alkylreste 1 bis 4 C-Atome enthalten. Bevorzugt werden die Vinylgruppe, Acryloxymethyl-, 3-Methacryloxypropyl- und 3-Acryloxypropyl-Gruppe.

Bevorzugt werden als Silikon b) α,ω-Divinyl-Polydimethylsiloxane, α,ω-Di-(3-acryloxypropyl)-Polydimethylsiloxane, α,ω-Di-(3-methacryloxypropyl)-Polydimethylsiloxane, α,ω-Di-(acryloxymethyl)-Polydimethylsiloxane, α-Monovinyl-Polydimethylsiloxane, α-Mono-(3-acryloxypropyl)-Polydimethylsiloxane, α-Mono-(3-methacryloxypropyl)-Polydimethylsiloxane, α-Mono-(acryloxymethyl)-Polydimethylsiloxane, α-Mono-(methacryloxymethyl)-Polydimethylsiloxane. Besonders bevorzugt sind Gemische von linearen oder verzweigten mono-(Meth)acryloxyalkyl-funktionellen Silikonen mit Kettenlänge ≤ 30 und linearen oder verzweigten mono-(Meth)-acryloxyalkyl-funktionellen Silikonen mit Kettenlänge ≥ 55, wobei die (Meth)Acryloxyalkylgruppe sich jeweils am Kettenende befindet. Bei den monofunktionellen Polydimethylsiloxanen befindet sich am anderen Kettenende ein Alkyl- oder Alkoxyrest, beispielsweise ein Methyl- oder Butylrest. Beispiele für geeignete Silikone sind endständige Monomethacrylat-funktionalisierte Polydimethylsiloxane der Firma Chisso Corporation, Japan. Besonders geeignet ist eine Mischung von Chisso FM 0711 (mittlere Kettenlänge 11 bei Polydispersität D = 1,4) und Chisso FM 0721 (mittlere Kettenlänge 63 bei Polydispersität D = 2,4). Die Polydispersität D wurde aus GPC-Messungen aus dem Verhältnis Mw/Mn ermittelt, Elutionsmittel THF p.a., bezogen auf Polystyrol-Standards mit Molekulargewicht 110000, 37000, 13700, 4000, 1390 und 310. Diese Silikone sind im Handel erhältlich.

Die Glasübergangstemperatur der Silikonorganocopolymere beträgt von 0°C bis 120°C, bevorzugt von 20°C bis 110°C. Dem Fachmann ist aufgrund der Glasübergangstemperatur Tg bekannt, welche Monomere bzw. Monomermischungen dafür eingesetzt werden können. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Silikone b) ist dem Fachmann bekannt, sie kann beispielsweise durch ringöffnende Polymerisation von D3-oder D4-Zyklen (niedermolekulare, cyclische Dialkylsiloxane) mit geeigneten Katalysatoren erfolgen, wobei sich eine Endgruppenfunktionalisierung mit niedermolekularen Verbindungen, die eine polymerisierbare Gruppe besitzen, anschließt. Mit der Auswahl eines geeigneten Katalysators für die Ringöffnung der cyclischen Dialkylsiloxane ist es auch möglich, eine weitere, oben beschriebene, funktionelle Gruppe in die polymerisierbare Silikonkomponente einzubringen. Zweckmäßige Verfahren zur Herstellung von Copolymeren sind angeführt in H. G. Elias, Makromoleküle, Band 2, Technologie, Hüthig & Wepf Verlag, Basel, Heidelberg, New York, 5. Auflage, 1992, S. 68-116 und H. G. Elias, Makromoleküle, Band 1, Chemische Struktur und Synthese, Wiley VCH, Weinheim, New York, Chichester, Brisbane, Toronto, Singapur, 6. Auflage, 1999, Kap.6, S. 148-184, Kap. 10, S. 299-350 und Kap. 12, S. 376-414.

Gegenstand der Erfindung ist weiterhin ein Verfahren zur Herstellung von Silikonorganocopolymere mittels radikalisch initiierter Polymerisation von
a) 30 bis 99 Gew.-%, bezogen auf das Gesamtgewicht der Komponenten a) und b), von einem oder mehreren Monomeren aus der Gruppe umfassend Vinylaromaten, Methacryl- oder Acrylsäureester von Alkoholen mit 1 bis 15 C-Atomen, Vinylester von unverzweigten oder verzweigten Alkylcarbonsäuren mit 1 bis 15 C-Atomen, Olefine, Diene, Vinylhalogenide, in Gegenwart von
b) 1 bis 70 Gew.-%, bezogen auf das Gesamtgewicht der Komponenten a) und b), einer Silikonkomponente, die aus einer Mischung von mindestens zwei Diorganopolysiloxanen mit der allgemeinen Formel R¹ₐR₃₋ₐSiO(SiR₂O)ₙSiR₃₋ₐR¹ₐ besteht, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a gleich oder verschieden ist und 0 oder 1 bedeutet, wobei mindestens ein a gleich 1 ist, und n eine ganze Zahl ist, wobei
   b1) 5 bis 65 Gew.-% der Silikonkomponente b) aus einem oder mehreren Diorganopolysiloxanen bestehen mit n ≤ 30 und nur einer endständigen polymerisierbaren Gruppe R¹, und
   b2) 35 bis 95 Gew.-% der Silikonkomponente b) aus einem oder mehreren Diorganopolysiloxanen bestehen, mit n ≥ 55 und mit einer bis zwei endständigen polymerisierbaren Gruppen R¹.

Die Polymerisation erfolgt in bekannter Weise, vorzugsweise durch Substanzpolymerisation, Suspensionspolymerisation oder durch Polymerisation in organischen Lösungsmitteln. Besonders bevorzugt ist die Lösungspolymerisation in einem organischen Lösungsmittel und die Suspensionspolymerisation in Wasser. Es kann auch eine Fällungspolymerisation in einem Lösungsmittel, welches die Monomeren a) und die Silikonkomponente b) löst, aber das resultierende Silikonorganocopolymer fällt, durchgeführt werden. Die Fällung kann aber auch aus der homogenen Lösung des Copolymers im Polymerisationsmedium durch die Zugabe eines Nichtlösemittels für das Silikonorganocopolymer bewirkt werden.

Bei der Polymerisation in Lösung können organische Lösungsmittel, wie Tetrahydrofuran (THF), Diethylether, Petrolether, Methylacetat, Ethylacetat, Methylethylketon, Aceton, Isopropanol, Propanol, Ethanol, Methanol, Toluol oder Benzol verwendet werden.

Die Polymerisation wird bei einer Temperatur von 25°C bis 100°C durchgeführt und durch Zugabe von einem oder mehreren gängigen Initiatoren radikalisch initiiert. Allgemeine Beispiele für gängige Initiatoren sind Azo-Initiatoren wie Azobisisobutyronitril, Percarbonate wie Cyclohexylperoxodicarbonat oder Perester wie t-Butylperneodecanoat oder t-Butylperpivalat.

Bevorzugt wird bei der Suspensionspolymerisation bei unterschiedlichen Temperaturen polymerisiert, je nach den Zerfallstemperaturen der jeweils eingesetzten Initiatoren. Es kann auch eine Temperaturrampe über einen bestimmten Zeitraum gefahren werden, vorzugsweise in Temperaturstufen von ΔT = 5°C bis 10°C. Bei der Suspensionspolymerisation sind Beispiele für besonders bevorzugte öllösliche Radikalinitiatoren t-Butylperoxy-2-ethylhexanoat, t-Butylperoxypivalat, t-Butylperoxyneodecanoat, Dibenzoylperoxid, t-Amylperoxypivalat, Di-(2-ethylhexyl)-peroxydicarbonat, 1,1-Bis-(t-butylperoxy)-3,3,5-trimethylcyclohexan und Di-(4-t-Butylcyclohexyl)peroxydicarbonat sowie Azobisisobutyronitril (AIBN).

Die Einstellung des Molekulargewichts und des Polymerisationsgrads ist dem Fachmann bekannt. Diese kann beispielsweise durch Zugabe von Regler, durch den Lösungsmittelgehalt, durch Variation der Initiatorkonzentration und durch Variation der Temperatur erfolgen. Regler oder Kettentransfermittel sind beispielsweise Isopropanol, Ethylbenzol (vorzugsweise bei der Suspensionspolymerisation) oder Dodecylmercaptan. Die Polymerisation von bei Raumtemperatur gasförmigen Monomeren, wie Ethylen, erfolgt unter Druck.

Die Komponenten a) und b) können zur Herstellung des Silikonorganocopolymers alle vorgelegt werden (Batch-Prozess), oder es wird ein Teil der Komponenten vorgelegt und der Rest dosiert (Semibatch-Prozess). Bevorzugt ist bei der Suspensionspolymerisation das Batch-Verfahren, das heißt alle Komponenten werden - in wässrigem Medium gut suspendiert - vorgelegt. Bei der Suspensionspolymerisation wird die Suspendierung und Stabilisierung der Komponenten a) und b) in Form von Tröpfchen durch wasserlösliche Schutzkolloide, wie Polyvinylpyrrolidon oder Polyvinylalkohol, erreicht. Es wird mit öllöslichem Initiator gearbeitet. Bevorzugt ist der Einsatz von zwei oder mehreren Initiatoren, die sich in ihren Zerfallstemperaturen unterscheiden.

Der oder die Initiatoren können alle vorgelegt, teilweise vorgelegt und teilweise dosiert oder komplett zudosiert werden, um die Polymerisation durchzuführen.

Bei der Lösungspolymerisation ist das Semibatch-Verfahren besonders bevorzugt. Bei diesem wird vorzugsweise das Verhältnis Monomere a) und polymerisierbare Silikonkomponente b) zu jedem Zeitpunkt der Polymerisation annähernd konstant eingestellt, so dass ein homogenes Polymerisat resultiert, gegebenenfalls kann gegen Ende der Polymerisation nochmals Initiator zugegeben werden, um das Copolymer durch Pfropfungsreaktionen zu modifizieren.

Nach Abschluß der Polymerisation in Lösung wird das Lösungsmittel sowie gegebenenfalls überschüssiges Monomer und Regler abdestilliert, gegebenenfalls auch unter vermindertem Druck. Verbliebenes Monomer kann gegebenenfalls vorher durch Nachpolymerisation mittels weiterer Initiatorzugabe minimiert werden. Die Suspensionspolymerisate können ferner durch Behandlung mit Wasserdampf von flüchtigen Bestandteilen befreit werden ("Strippprozess"). Die Suspensionspolymerisate fallen in Form von Perlen variablen Durchmessers an, welche durch Filtration von Wasser getrennt werden können und anschließend getrocknet werden.

Im Rahmen der Erfindung ist es besonders wichtig, migrationsarme Silikonorganocopolymere zu erhalten. Nicht polymerisiertes Silikon, das zu einer Migration führt, kann mittels Destillation bei Lösungspolymerisaten und mittels Wasserdampfdestillation bei Suspensionspolymerisaten aufgrund des hohen Siedepunkts nicht entfernt werden. In einer besonders bevorzugten Ausführungsform wird die Migration dadurch verringert, indem das mittels der genannten Polymerisationsverfahren erhaltene Silikonorganocopolymer mit einem Lösungsmittel, welches für das Silikonorganocopolymer ein sehr schlechtes Lösungsmittel oder ein Nichtlösemittel ist, und welches für die Silikonkomponente b) ein schlechtes bis mäßiges Lösemittel ist, gewaschen wird. Mit dieser Maßnahme werden Restmonomere, insbesondere nicht angebundenes Silikon b), Initiatorbruchstücke und Phlegmatisierungsmittel, wie Kohlenwasserstoffe, des eingesetzten Initiators entfernt.

Geeignete Lösungsmittel sind solche, in denen die Löslichkeit des Silikonorganocopolymeren bei Normalbedingungen < 0.1 g auf 100 ml Lösungsmittel beträgt, und die Löslichkeit der Silikon-Komponente b) > 0.1 g auf 100 ml beträgt. Ein dafür geeignetes Lösungsmittel hängt sehr stark von der organischen Polymerkomponente ab. Generell in Frage kommen beispielsweise Toluol, Benzol, Ethylacetat, Hexan, Cyclohexan, Heptan, Chloroform, Methylenchlorid, 1,2-Dimethoxyethan, Isopropylacetat, Methylethylketon, THF, Isopropanol oder Ethanol. Beispiele für geeignete Lösungsmittel sind bei auf Styrol basierenden Silikonorganocopolymeren beispielsweise Isopropanol oder Cyclohexan.

Die beiden Komponenten des erfindungsgemäßen Siliconorganocopolymers sind ein nicht-polares Weichsegment, welches von der Silikonkomponente b) stammt, und ein Hartsegment, welches von dem Organopolymer a) herrührt. Die Haftung kann durch den Einbau oben genannter Hilfsmonomere nochmals verbessert werden. Zusätzlich verleiht das Hartsegment dem Silikonorganocopolymer solche physikalischen Eigenschaften, dass das Silikonorganocopolymer bei 25°C nicht flüssig ist und extrudiert werden kann. Das schmelzrheologische Verhalten kann durch gezielte Auswahl der Monomeren a) und b) und gegebenenfalls der Hilfsmonomeren dahingehend gesteuert werden, dass ein nicht vernetztes, thermoplastisches und extrudierbares Siliconorgancopolymer zugänglich wird. Der Phasenwinkel δ (erhältlich aus oszillierenden rheologischen Messungen an dem geschmolzenen Siliconorganocopolymer, bei der Frequenz 1 Hz; im linear viskoelastischen Bereich) soll im Temperaturbereich zwischen 100°C und 200°C, entweder ab einer bestimmten Temperatur innerhalb dieses Bereiches oder innerhalb eines Temperaturintervalls in dem genannten Bereich, einen Wert ≥ 45° annehmen. Der Phasenwinkel δ ist wie folgt definiert: tan δ = G''/G', wobei G' der Speichermodul ist und die elastischen Eigenschaften beschreibt, und G'' für den Verlustmodul steht, der eine Aussage über die viskosen Eigenschaften liefert. Wenn der Phasenwinkel δ größer oder gleich 45° ist, so hat das Siliconorganocopolymer in der Schmelze überwiegend thermoplastische Eigenschaften.

Die Phasenseparation und Unverträglichkeit der Polymere, die aus den Monomeren a) erhalten werden, und der mit eingebauten Siliconkomponente b), welche zu einer Domänenbildung und damit zu trüben Copolymeren und weiteren Nachteilen führen würde, wird durch die erfindungsgemäße Auswahl der Bestandteile der Silikonkomponente b) verringert oder ganz vermieden. Dies gelingt dergestalt, dass ein definierter Anteil an niedermolekularen monofunktionellen Silikonen b1) mit einer Kettenlänge ≤ 30 in der Mischung der Silikonkomponente b) enthalten ist. Dadurch werden die für einen guten Release-Effekt verantwortlichen höhermolekularen, mono-, oder mono- und difunktionellen Silikone b2) mit Kettenlängen ≥ 55 mit den Polymerketten der Monomeren a) verträglich gemacht und mit den Monomeren a) so copolymerisiert, dass ein homogenes und hoch transparentes Silikonorganocopolymer entsteht.

Die Silikonorganocopolymere können als Schutzbeschichtung bei Bauanwendungen eingesetzt werden. Weiter sind sie geeignet zur Beschichtung von Textilien, Papier, Kunststofffolien und Metallen. Ein weiteres Einsatzgebiet ist das als Modifizierungs- und Hydrophobierungsmittel, als Anti-fouling-Beschichtung und als Dichtstoffe (falls über Silangruppen feuchtevernetzend). Sie eignen sich auch als Additiv für kosmetische Formulierungen, wie Haarspray oder Haarfixierungsmittel.

Die Silikonorganocopolymere werden bevorzugt zur Herstellung von Trennmitteln und abhäsiven Überzügen, also klebrige Stoffe abweisende Überzüge, wie Trennpapier, Trennkunststofffolien oder Trennfilme, verwendet. Die mit den Silikonorganocopolymeren erhaltenen abhäsiven Überzüge haben sehr gute Trenneigenschaften, die für viele verschiedene spezifische Anwendungen zugeschnitten werden können. Die abhäsiven Überzüge weisen im Allgemeinen eine gute Haftung zum Substrat auf. Die Haftung auf dem zu beschichtenden Substrat kann bei dem Silikonorganocopolymer durch das Einbringen von weiteren funktionellen Gruppen, entweder durch Hilfsmonomere oder durch Funktionen bei den Silikonölen der Silikonkomponente b), nochmals verbessert werden. Wird ein zu beschichtendes Substrat eingesetzt, das selbst funktionelle Gruppen trägt, können im Silikonorganocopolymeren vorzugsweise solche Gruppen eingebracht werden, die mit den funktionellen Gruppen des Substrats reagieren können, so dass eine sehr feste Anbindung von Silikonorganocopolymer und Substrat über kovalente Bindungen erfolgt. Dies kann beispielsweise über die Temperatur - auch bei der Extrusion - oder durch die Zugabe von Katalysatoren erreicht werden. Bei Substraten, auf den das Silikonorganocopolymere schlechter haftet, können überdies Haftvermittler eingesetzt werden.

Durch gezielte Auswahl der Silikonkomponente b) und deren Menge im erfindungsgemäßen Silikonorganocopolymer ist es möglich, einen weiten Bereich von gewünschten Trenneigenschaften zu erhalten. Die Silikonorganocopolymere werden vorzugsweise durch Extrusion auf Substrate aufgebracht, oder bei der Herstellung der Folien in einem Extrusions- bzw. Coextrusionsvorgang mitaufgebracht. Die Silikonorganocopolymere können auch als Lösungen in organischem Lösungsmittel, wie Toluol, Benzin, Methylethylketon, THF, Ethylacetat oder Xylol, auf klebrige Stoffe abweisend zu machende Oberflächen aufgetragen werden. Das Auftragen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, beispielsweise mittels einer Offsetgravur-Überzugsvorrichtung, Messer- oder Rakel-Beschichtung oder mittels einer Luftbürste.

Beispiele für klebrige Stoffe abweisend zu machende Oberflächen sind diejenigen von Papier, Holz, Kork und Kunststofffolien wie Polyethylenfolien oder Polypropylenfolien, gewebtem und ungewebtem Tuch aus natürlichen oder synthetischen Fasern, keramischen Gegenstanden, Glas, einschließlich Glasfasern, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln.

Bei Papier kann es sich um minderwertige Papiersorten, wie saugfähige Papiere, einschließlich rohem, das heißt nicht mit Chemikalien und/oder polymeren Naturstoffen vorbehandeltes Kraftpapier mit einem Gewicht von 60 bis 150 g/m², ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem zu behandelnden Papier kann es sich aber auch selbstverständlich um hochwertige Papiersorten; wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die Silikonorganocopolymere eignen sich beispielsweise zum Herstellen von Trenn-, Abdeck-, und Mitläuferpapieren, einschließlich Mitläuferpapieren, die bei der Herstellung von Gieß- oder Dekorfolien oder. von Schaumstoffen, einschließlich solcher aus Polyurethan, eingesetzt werden. Die Silikonorganocopolymere eignen sich weiterhin zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Sie eignen sich auch für die Ausrüstung von Verpackungsmaterial, wie solchem aus Papier, Pappschachteln, Metallfolien und Fässern, z. B. Pappe, Kunststoff, Holz oder Eisen, das für Lagerung und/oder Transport von klebrigen Gütern, wie Klebstoffen, klebrigen Lebensmitteln, z. B. Kuchen, Honig, Bonbons und Fleisch; Bitumen, Asphalt, gefetteten Materialien und Rohgummi, bestimmt ist. Ein weiteres Beispiel für die Anwendung der Silikonorganocopolymere ist die Ausrüstung von Trägern zum Übertragen von Haftklebeschichten beim sogenannten "TransferVerfahren". Die Silikonorganocopolymere können auch extrudiert werden, um Überzüge herzustellen oder in Abmischungen mit filmbildenden Polymeren coextrudiert werden, um Filme herzustellen. Die Auftragungsmenge des Silikonorganocopolymers in den Überzügen kann empirisch vom Fachmann bestimmt werden und hängt weitgehend von seiner Zusammensetzung und von der Anwendung des beschichteten Substrates ab. Die Überzüge bzw. Filme bieten einen Bereich an Trenneigenschaften, der für eine Verwendung bei verschiedenen Trennanwendungen zweckmäßig ist. Die Überzüge bzw. Filme sind besonders für die Herstellung von Substraten mit abhäsiven Eigenschaften, für die Herstellung von vorimprägnierten Materialformen und bei der Herstellung von Foliengießverbindungen (SMC) und dicken Gießverbindungen (TMC), wie auch von Massengießverbindungen (BMC) anwendbar. Die Überzüge bzw. Filme sind auch als Trägerbahn für die Herstellung von faserverstärkten Platten (FRP) besonders anwendbar.

Die nachfolgenden Beispiele dienen der näheren Erläuterung der Erfindung, ohne diese in irgendeiner Weise einzuschränken.

Folgende Edukte wurden eingesetzt:
Silikon b11:
   α-Mono-(3-methacryloxypropyl)-ω-n-butyl-Polydimethylsiloxan mit einer mittleren Kettenlänge von 11 und einer Polydispersität D von 1.4 (FM 0711 der Firma Chisso)
Silikon b21:
   α-Mono-(3-methacryloxypropyl)-ω-n-butyl-Polydimethylsiloxan mit einer mittleren Kettenlänge von 63 und einer Polydispersität D von 2.4 (FM 0721 der Firma Chisso)
Silikon b22:
   α,ω-Di-(3-methacryloxypropyl)-Polydimethylsiloxan mit einer mittleren Kettenlänge von 100 und einer Polydispersität D von 2.2 (FM 7725der Fa. Chisso)

Das gewichtsmittlere Molekulargewicht Mw und die Polydispersität D wurden aus GPC-Messungen ermittelt, Elutionsmittel THF p.a., bezogen auf Polystyrol-Standards mit Molekulargewicht 110000, 37000, 13700, 4000, 1390 und 310).

### Beispiel 1:

### Silikonorganocopolymer durch Lösungspolymerisation

In einem 21-Dreihalskolben mit Rührer, Rückflußkühler, Dosiervorrichtung, Thermometer, Heizvorrichtung (mit Temperaturkontrolle) und Stickstoff-Anschluß wurden 795.2 g Methylethylketon, 3.94 g Silikonöl b11, 3.94 g Silikonöl b21, 31.56 g Methylmethacrylat und 2.89 g t-Butylperpivalat (75 Gew.-% in Aliphaten; Halbwertszeit t1/2 = 1 h bei 74°C) vorgelegt. Diese Vorlage wurde auf 70°C erwärmt, während mit 200 Upm gerührt wurde. 10 min nach Start der Polymerisation wurde eine Initiatordosierung mit 13.3 ml/h über 360 min zugetropft. Die Initiatordosierung bestand aus 53.25 g Methylethylketon und 11.31 g t-Butylperpivalat. Gleichzeitig mit dem Beginn der Initiatordosierung wurde die Monomerdosierung eingefahren. Diese lief mit einer Rate von 83.6 ml/h über einen Zeitraum von 240 min. Die Monomerdosierung bestand aus 31.56 g Silikonöl b11, 31.56 g Silikonöl b21 und 252.43 g Methylmethacrylat. 60 min nach dem Ende der Initiatordosierung wurde die Temperatur um 5°C bis 10°C erhöht, um auszupolymerisieren.
Die erhaltene Lösung mit dem Silikonorganocopolymer wurde danach entmonomerisiert, indem das Lösungsmittel mit Restmonomer abdestilliert wurde und die abdestillierte Menge durch frisches Methylethylketon ersetzt wurde. Die entmonomerisierte Lösung mit dem Silikonorganocopolymer wurde am Rotationsverdampfer zur Trockne eingedampft und dadurch vom Lösungsmittel befreit. Es wurde ein transparentes, hartes Granulat erhalten.
Analysen: Molekulargewicht M_{w} (Massenmittel aus GPC; Elutionsmittel THF): 168000 g/mol (bezogen auf Polystyrol-Standards); Polydispersität D: 2.3; Glasübergangstemperatur Tg (aus DSC) : 84°C

### Beispiel 2:

### Silikonorganocopolymer durch Lösungspolymerisation mit nachträglicher Modifikation durch Pfropfung

In einem 21-Dreihalskolben mit Rührer, Rückflußkühler, Dosiervorrichtung, Thermometer, Heizvorrichtung (mit Temperaturkontrolle) und Stickstoff-Anschluß wurden 798.0 g Methylethylketon, 4.03 g Silikonöl b11, 4.03 g Silikonöl b21, 32.24 g Methylmethacrylat und 983.18 mg t-Butylperpivalat (75 Gew.-% in Aliphaten; Halbwertszeit t1/2 = 1 h bei 74°C) vorgelegt. Diese Vorlage wurde auf 70°C erwärmt, während mit 200 Upm gerührt wurde. 10 min nach Start der Polymerisation wurde eine Initiatordosierung mit 12.0 ml/h über 360 min zugetropft. Die Initiatordosierung bestand aus 54.41 g Methylethylketon und 3.85 g t-Butylperpivalat. Gleichzeitig mit dem Beginn der Initiatordosierung wurde die Monomerdosierung eingefahren. Diese lief mit einer Rate von 85.3 ml/h über einen Zeitraum von 240 min. Die Monomerdosierung bestand aus 32.24 g Silikonöl b11, 32.24 g Silikonöl b21 und 257.92 g Methylmethacrylat. Der Ansatz lief 60 min nach dem Ende der Initiatordosierung auf Temperatur (70°C). Anschließend wurde eine nachträgliche Modifikation (durch Pfropfungsreaktion) des erhaltenen Siliconorganocopolymers durchgeführt, indem zu dem Ansatz nochmals eine Initiatorlösung zugegeben wurde. Diese Initiatorlösung wurde innerhalb von 30 min zugetropft und bestand aus 2.42 g t-Butylperpivalat und 34.2 g Methylethylketon. Der Ansatz lief danach 1 Stunde bei 70°C. Die erhaltene Lösung mit dem Siliconorganocopolymer wurde anschließend entmonomerisiert, indem das Lösungsmittel mit Restmonomer abdestilliert wurde und die abdestillierte Menge durch frisches Methylethylketon ersetzt wurde. Die entmonomerisierte Lösung mit dem Silikonorganocopolymer wurde am Rotationsverdampfer zur Trockne eingedampft und dadurch vom Lösungsmittel befreit. Es wurde ein transparentes, hartes Granulat erhalten.
Analysen: Molekulargewicht M_{w} (Massenmittel aus GPC; Elutionsmittel THF): 321000 g/mol (bezogen auf Polystyrol-Standards) ; Polydispersität D: 2.8; Glasübergangstemperatur Tg (aus DSC) : 86°C

### Beispiele 3 a) und b) :

### Suspensionspolymerisation

In einem 5001-Rührkessel mit Rührer, Rückflußkühler, Dosiervorrichtungen, Heizvorrichtung (mit Temperaturkontrolle) und Stickstoff-Anschluß wurden 237.35 kg entionisiertes Wasser, 771.94 g Kupferacetat (1 %-ige wässrige Lösung) und 10.29 kg Polyvinylpyrrolidon (5 %-ige wässrige Lösung) vorgelegt. Die Lösung wurde mit 100 Upm gerührt. In der Zwischenzeit wurde eine Mischung von 10.29 kg Silikonöl b11, 10.29 kg Silikonöl b21 und 82.34 kg Styrol vorbereitet. Zu dieser Monomermischung wurde eine Kombination von zwei unterschiedlichen Initiatoren gegeben. Als Initiatoren wurden 1.80 kg t-Butylperoxyneodecanoat (95 Gew.-% in Aliphaten; Halbwertszeit t1/2 = 1 h bei 64°C) und 1.75 kg t-Butylperpivalat (75 Gew.-% in Aliphaten; Halbwertszeit t1/2 = 1 h bei 74°C) verwendet. Die Monomerenmischung mit den Initiatoren wurde kurze Zeit bei Raumtemperatur gerührt und dann langsam zu der wässrigen Vorlage in den Rührkessel gegeben. Der Kesselinhalt wurde durch Rühren bei 100 Upm vermischt, wodurch die Monomeren in Wasser suspendiert wurden. Anschließend wurde die Temperatur auf 55°C erhöht und 4 h lang gehalten. Danach wurde die Temperatur mit einer Rampe von 0.1°C/min auf 60°C erhöht und 4 h lang gehalten. Dann wurde mit einer Temperaturrampe von 0.1°C/min auf 65°C erwärmt. Diese Temperatur wurde 4 h lang gehalten. Dann wurde mit einer Temperaturrampe von 0.1°C/min auf 70°C erwärmt. Diese Temperatur wurde 4 h lang gehalten. Die Temperatur wurde danach mit einer Rampe von 0.1°C/min auf 75°C erhöht und 4 h lang gehalten. Um auszupolymerisieren, wurde die Temperatur auf 80°C erhöht und 2 h lang gehalten. Der Ansatz wurde einer Behandlung mit Wasserdampf unterzogen, um flüchtige Verbindungen auszutreiben, und schließlich auf Raumtemperatur abgekühlt. Die erhaltenen Perlen wurden durch einen Filtrationsschritt vom suspendierenden Medium, das heißt von dem Wasser, getrennt. Das Produkt wurde in zwei Teile aufgeteilt: Die eine Hälfte der Perlen wurde mehrmals mit Wasser gewaschen und danach getrocknet (Beispiel 3a). Die andere Hälfte wurde ebenfalls mehrmals mit Wasser gewaschen und anschließend zweimal mit Isopropanol bei einer Temperatur von 50°C längere Zeit (ca. 4 h) behandelt bzw. gewaschen. Zuletzt wurde erneut mit Wasser gewaschen und die Perlen wurden getrocknet (Beispiel 3b). Es wurden stets hoch transparente, harte Perlen erhalten.
Analysen 3a: Molekulargewicht M_{w} (Massenmittel aus GPC; Elutionsmittel THF): 280000 g/mol (bezogen auf Polystyrol-Standards); Polydispersität D: 8.5; Glasübergangstemperatur Tg (aus DSC): 78°C.
Analysen 3b: Mw und D wie Beispiel 3 a; Glasübergangstemperatur Tg (aus DSC): 79°C.

### Beispiele 4 a) und b):

### Suspensionspolymerisation

Analog der Beispiele 3a) und 3b) nur mit dem Unterschied, dass für die Monomerenmischung eine Mischung von 12.87 kg Silikonöl b11, 12.87 kg Silikonöl b21 und 77.19 kg Styrol verwendet wurde. Es wurden stets hoch transparente, harte Perlen erhalten. Analysen 4a (nur mit Wasserdampf behandelt und mit Wasser gewaschen) : Molekulargewicht M_{w} (Massenmittel aus GPC; Elutionsmittel THF): 187000 g/mol (bezogen auf Polystyrol-Standards); Polydispersität D: 6.9; Glasübergangstemperatur Tg (aus DSC) : 72°C.
Analysen 4b (mit Wasserdampf behandelt, mit Isopropanol und Wasser gewaschen): Mw und D wie bei Beispiel 4 a; Glasübergangstemperatur Tg (aus DSC): 74°C.

### Beispiele 5 a) und b):

### Suspensionspolymerisation

Analog der Beispiele 3a) und 3b) nur mit dem Unterschied, dass für die Monomerenmischung eine Mischung von 15.42 kg Silikonöl b11, 15.42 kg Silikonöl b21 und 71.95 kg Styrol verwendet wurde. Es wurden stets hoch transparente, harte Perlen erhalten. Analysen 5a (nur mit Wasserdampf behandelt und mit Wasser gewaschen): Molekulargewicht M_{w} (Massenmittel aus GPC; Elutionsmittel THF): 250000 g/mol (bezogen auf Polystyrol-Standards); Polydispersität D: 5.2; Glasübergangstemperatur Tg (aus DSC): 69°C.
Analysen 5b (mit Wasserdampf behandelt, mit Isopropanol und Wasser gewaschen): Alle Analysen wie bei Beispiel 5 a).

### Beispiele 6 a) und b):

### Suspensionspolymerisation

Analog der Beispiele 3a) und 3b) nur mit dem Unterschied, dass für die Monomerenmischung eine Mischung von 15,42 kg Silikon b11, 14.91 kg Silikon b21, 0.51 kg Silikon b22 und 71.95 kg Styrol verwendet wurde. Es wurden stets hoch transparente, harte Perlen erhalten.
Analysen 6a (nur mit Wasserdampf behandelt und mit Wasser gewaschen): Molekulargewicht M_{w} (Massenmittel aus GPC; Elutionsmittel THF): 420000 g/mol (bezogen auf Polystyrol-Standards); Polydispersität D: 3.7; Glasübergangstemperatur Tg (aus DSC): 72°C.
Analysen 6b (mit Wasserdampf behandelt, mit Isopropanol und Wasser gewaschen): Bis auf die Glasübergangstemperatur Tg = 73°C identisch mit den Analysen des Produkts aus Beispiel 6a.

### Beispiele 7 a) und b):

### Suspensionspolymerisation

Analog der Beispiele 3a) und 3b) nur mit dem Unterschied, dass für die Monomerenmischung eine Mischung von 10.29 kg eines Silikonöls, das an einem Ende eine Methacryloxymethyl-Gruppe, am anderen Ende eine Isobutoxydimethylsilyl-Gruppe trägt, und das ferner eine mittlere Kettenlänge von 21.4 und eine Polydispersität D von 2.2 besitzt, und 10.29 Silikonöl b21 sowie 82.34 kg Styrol eingesetzt wurde. Es wurden hoch transparente, harte Perlen erhalten.
Analysen 7a (nur mit Wasserdampf behandelt und mit Wasser gewaschen): Molekulargewicht M_{w} (Massenmittel aus GPC; Elutionsmittel THF): 300000 g/mol (bezogen auf Polystyrol-Standards); Polydispersität D: 6.1; Glasübergangstemperatur Tg (aus DSC) : 80°C.
Analysen 7b (mit Wasserdampf behandelt, mit Isopropanol und Wasser gewaschen): Alle Analysen wie bei Beispiel 7 a).

### Beispiel 8:

### Lösungspolymerisation

Analog Beispiel 2 mit dem Unterschied, dass die Monomervorlage aus einer Mischung von 32.24 g Methylmethacrylat, 4.03 g Silikonöl b11, 3.22 g α-Monovinyl-Polydimethylsiloxan (mit mittlerer Kettenlänge von 100 und Polydispersität D = 3.2) und 805.94 mg α,ω-Divinyl-Polydimethylsiloxan (mit mittlerer Kettenlänge von 100 und D = 3.3) bestand. Die Monomerdosierung enthielt 257.92 g Methylmethacrylat, 32.24 g Silikonöl b11, 25.79 g α-Monovinyl-Polydimethylsiloxan (mit mittlerer Kettenlänge von 100 und Polydispersität D = 3.2) und 6.45 g α,ω-Divinyl-Polydimethylsiloxan (mit mittlerer Kettenlänge von 100 und D = 3.3). Es wurde ein transparentes, hartes Granulat erhalten.
Analysen 8: Molekulargewicht M_{w} (Massenmittel aus GPC; Elutionsmittel THF): 340000 g/mol (bezogen auf Polystyrol-Standards); Polydispersität D: 2.5; Glasübergangstemperatur Tg (aus DSC): 83°C

### Vergleichsbeispiel 9:

### Suspensionspolymerisation - nur langkettiges Silikon b2)

Wie Beispiel 3 mit dem Unterschied, dass als Silikonkomponente b) 20.89 kg b22, also ausschließlich dieses Silikonöl (neben 82.34 kg Styrol als Monomer a)), eingesetzt wurde. Es wurden sehr harte, merklich trübe Perlen erhalten, die in organischen Lösungsmitteln nicht löslich waren (Perlen quollen nur auf).
Analysen 9:
Molekulargewicht M_{w} (Massenmittel aus GPC; Elutionsmittel THF): 620000 g/mol (bezogen auf Polystyrol-Standards); Polydispersität D: 2.9; Glasübergangstemperaturen Tg (aus DSC): -121°C; 93°C.

### Vergleichsbeispiel 10:

### Lösungspolymerisation - nur langkettiges Silikon b2)

Wie Beispiel 2 mit dem Unterschied, dass als Silikonkomponente b) ausschließlich das Silikonöl b21 eingesetzt wurde. Die Monomervorlage bestand demnach aus 32.24 g Methylmethacrylat und 8.06 g Silikonöl b21, die Monomerdosierung enthielt 257.92 g Methylmethacrylat und 64.48 g Silikonöl b21.
Es wurde ein hartes, etwas trübes Granulat erhalten.
Analysen: Molekulargewicht M_{w} (Massenmittel aus GPC; Elutionsmittel THF): 300000 g/mol (bezogen auf Polystyrol-Standards); Polydispersität D: 2.1; Glasübergangstemperatur Tg (aus DSC) : 90°C

### Vergleichsbeispiel 11:

### Suspensionspolymerisation - nur langkettiges Silikon b2)

In einem 21-Dreihalskolben mit Rührer, Rückflußkühler, Dosiervorrichtung, Thermometer, Heizvorrichtung (mit Temperaturkontrolle) und Stickstoff-Anschluß wurden 1.22 kg entionisiertes Wasser, 3.78 g Kupferacetat (1 %-ige wässrige Lösung) und 50.35 g Polyvinylpyrrolidon (5 %-ige wässrige Lösung) vorgelegt. Die Lösung wurde 10 min lang mit 200 Upm gerührt. In der Zwischenzeit wurde eine Mischung von 100.7 g Silikonöl b21 und 402.8 g Styrol vorbereitet. Zu dieser Mischung wurden 25.18 g Toluol gegeben. Ebenso wurde eine Kombination von 3 unterschiedlichen Initiatoren zu der Monomermischung gegeben. Als Initiatoren wurden 3.08 g t-Butylperoxy-2-ethylhexanoat (98 %; Halbwertszeit t1/2 = 1 h bei 92°C), 4.03 g t-Butylperpivalat (75 % in Aliphaten; Halbwertszeit t1/2 = 1 h bei 74°C) und 5.44 g t-Butylperoxyneodecanoat (75 % in Aliphaten; Halbwertszeit t1/2 1 h bei 64°C) verwendet. Die Monomerenmischung mit den Initiatoren wurde 5 min bei Raumtemperatur gerührt und dann langsam zu der wäßrigen Vorlage in den Dreihalskolben gegeben. Der Kolbeninhalt wurde durch Rühren bei 200 Upm vermischt, wodurch die Monomeren in Wasser suspendiert wurden. Anschließend wurde die Temperatur innerhalb einer Stunde (1 h) auf 55°C erhöht und 4 h lang gehalten. Dann wurde die Temperatur innerhalb 1 h auf 70°C erhöht und 4 h lang gehalten. Um auszupolymerisieren, wurde die Temperatur innerhalb 1 h auf 80°C erhöht und 4 h lang gehalten. Der Ansatz wurde auf Raumtemperatur abgekühlt. Die erhaltenen Perlen wurden durch dreimaliges Dekantieren und Abnutschen isoliert. Das Produkt wurde auf der Nutsche 5mal mit entionisiertem Wasser gewaschen. Die merklich trüben Perlen wurden 24 h lang bei 35°C im Trockenschrank getrocknet.
Analysen: Molekulargewicht M_{w} (Massenmittel aus GPC; Elutionsmittel THF): 240000 g/mol (bezogen auf Polystyrol-Standards); Polydispersität D: 7.5; Glasübergangstemperaturen Tg (aus DSC) : -58°C (klein); 101°C.

### Vergleichsbeispiel 12:

Suspensionspolymerisation - nur langkettiges Silikon-b2)Wie Vergleichsbeispiel 11 mit dem Unterschied, dass für die Monomerenmischung eine Mischung von 150.85 g Silikonöl b21 und 351.98 g Styrol verwendet wurde. Es wurden trübe, harte Perlen erhalten.
Analysen: Molekulargewicht M_{w} (Massenmittel aus GPC; Elutionsmittel THF): 210000 g/mol (bezogen auf Polystyrol-Standards); Polydispersität D: 6.8; Glasübergangstemperaturen Tg (aus DSC) : -47°C (klein); 98°C.

### Vergleichsbeispiel 13:

Suspensionspolymerisation - nur kurzkettiges Silikon b1) Wie Vergleichsbeispiel 11 mit dem Unterschied, dass für die Monomerenmischung eine Mischung von 100.7 g Silikonöl b11 und 402.8 g Styrol verwendet wurde. Es wurden hoch transparente, harte Perlen erhalten.
Analysen: Molekulargewicht M_{w} (Massenmittel aus GPC; Elutionsmittel THF): 142000 g/mol (bezogen auf Polystyrol-Standards) ; Polydispersität D: 4.5; Glasübergangstemperatur Tg (aus DSC) : 60°C.

### Anwendungstechnische Ausprüfungen:

### 1. Bestimmung der Release-Werte

### 1.1 Applikation aus Lösung

Die Silikonorganocopolymere aus den (Vergleichs)Beispielen wurden in Toluol oder Ethylacetat mit einer Konzentration von 40 oder 50 Gew.-% gelöst. PP-Folien (Polypropylen-Folien) oder PET-Folien (Polyethylenterephthalat-Folien) wurden jeweils mit der Lösung mit Hilfe eines Glasstabs beschichtet (Schichtdicke ca. 40 µm), und die abhäsiven Eigenschaften wurden nach FINAT Test Methode Nr.3 mit den im Handel erhältlichen TESA Testklebebändern A 7475, K 7476, und T 154 bestimmt. Die Ergebnisse sind in der nachfolgenden Tabelle 1 zusammengefasst. Je niedriger der Testwert, umso höher ist der Releaseeffekt (umso besser das Releaseverhalten). Bei einem Polymer, das so adhäsiv ist, dass sich der Tesa-Steifen nicht mehr von der Beschichtung mit diesem Polymer trennen läßt, wird die Bezeichnung "verblockt" verwendet. Hier gibt es keine abhäsiven Eigenschaften mehr, ein Messwert kann nicht erhalten werden.

### 1.2 Applikation mittels Extrusion

Die Silikonorganocopolymere wurden auf ein filmisches Substrat coextrudiert. Die Trennkräfte wurden von der Silikonorganocopolymer-Seite bestimmt. Die coextrudierten Filme zeigten gegenüber den TESA Testklebebändern ähnliche Werte wie bei den aus Lösung beschichteten Folien, so dass nachfolgend nur die Release-Werte für die Beschichtung mit den Silikonorganocopolymeren aus Lösung vorgestellt werden.

### 2. Migrationstest:

Die Silikonorganocopolymere aus den (Vergleichs)Beispielen wurden in Toluol oder Ethylacetat mit einer Konzentration von 40 Gew.-% gelöst. Die PP-Folien (Polypropylen-Folien) oder PET-Folien (Polyethylenterephthalat-Folien) wurden jeweils mit der Lösung mit Hilfe eines Glasstabs beschichtet (Schichtdicke ca. 40 µm). Die ausgehärtete Beschichtung wurde mit Tesa-Film beklebt, das Tesa-Band mit dem Finger festgedrückt, und danach abgezogen. Der Vorgang wurde zweimal wiederholt. Zur Beurteilung wurde das Tesa-Band auf sich selbst geklebt ("Loop-Test") und auseinandergezogen.

Die Beurteilung erfolgt mit dem Schulnotensystem in 6 Stufen:
Note 1: keine Migration, Tesa klebt genauso gut wie vorher (= sehr gutes Resultat);
Note 6: sehr starke Migration; Tesaband klebt nicht mehr auf sich selbst, Kleber durch Silikon geschädigt (= sehr schlechtes Resultat)

### 3. Klebkrafterhaltung bzw. Restklebkraft:

Analog der obigen Tests wurde das Silikonorganocopolymere auf Folie aufgetragen und ausgehärtet. Die ausgehärtete Beschichtung wurde mit Tesa-Film beklebt, das Tesa-Band mit dem Finger festgedrückt, und der Tesa-Film 24 h auf der beschichtete Folie belassen. Anschließend wurde der Tesa-Film abgezogen und dann auf ein unbeschichtetes Substrat geklebt.
Die Messung der Kraft für das Abziehen wurde bezogen auf den Kraftaufwand für einen gleichen Tesa-Streifen, der nicht vorher auf eine beschichtete Folie geklebt war.
Bei diesem Test ist ein hoher Prozentwert am besten; dies bedeutet 100 % ist erreicht bei keiner Klebkraftminderung und keiner Kleberschädigung.

### 4. Optische Beurteilung Transparenz:

1: absolut transparent, glasklar
2: ganz leichte Eintrübung
3: merkliche Eintrübung
4: starke Eintrübung, Produkt ist weiß, undurchsichtig

### 5. Schmelzrheologische Untersuchungen

Die Schmelzrheologie wurde mit dem Gerät Bohlin CVO 120 HR in einem Temperaturbereich von 120°C bis 210°C, in Ausnahmefällen bis 230°C bestimmt. Es wurde das Meßsystem Platte/Platte gewählt, mit einem Spaltabstand von 200 bis 1000 µm (je nach Probe). Mit oszillierenden Messungen bei einer Frequenz von 1 Hz wurden die komplexe Schmelzviskosität η°, der Speichermodul G' und der Verlustmodul G'' bestimmt. Der Phasenwinkel δ wird mit tan δ = G''/G' bestimmt.

Die Testergebnisse sind in der nachfolgenden Tabelle zusammengefaßt.

Der Vergleich der Beispiele 3a, 4a, 5a, 6a und 7a mit den Beispielen 3b, 4b, 5b, 6b und 7b zeigt, dass mit dem Waschschritt unter Verwendung eines Lösungsmittels, welches für das Silikonorganocopolymer ein sehr schlechtes Lösungsmittel oder ein Nichtlösemittel ist, und welches für die Silikonkomponente b) ein schlechtes bis mäßiges Lösemittel ist, die Migration deutlich reduziert werden kann.

Die Vergleichsbeispiele 10 bis 12 zeigen, dass mit Silikonorganocopolymeren, welche nicht ein Gemisch der Silikonkomponenten b1) und b2), sondern allein die langkettige Komponente b2) enthalten, bezüglich Migration, Restklebkraft und Transparenz nur unbefriedigende Werte erreicht werden.

Vergleichsbeispiel 9 zeigt, dass bei den erfindungsgemäßen Silikonorganocopolymeren die kurzkettige monofunktionelle Komponente essentiell ist, um ein transparentes und insbesondere extrudierbares Material zu erhalten. Wird nur eine langkettige Komponente b2) alleine eingesetzt, die difunktionell ist, so führt dies zu einer ausgeprägten Vernetzung und damit zu duroplastischem Verhalten.

Vergleichsbeispiel 13 zeigt, dass mit Silikonorganocopolymeren, welche nicht ein Gemisch der Silikonkomponenten b1) und b2), sondern allein die kurzkettige Komponente b1) enthalten, zwar transparente, extrudierbare Massen mit befriedigender Migration erhalten werden, die Release-Eigenschaften aber weitgehend verloren gehen.

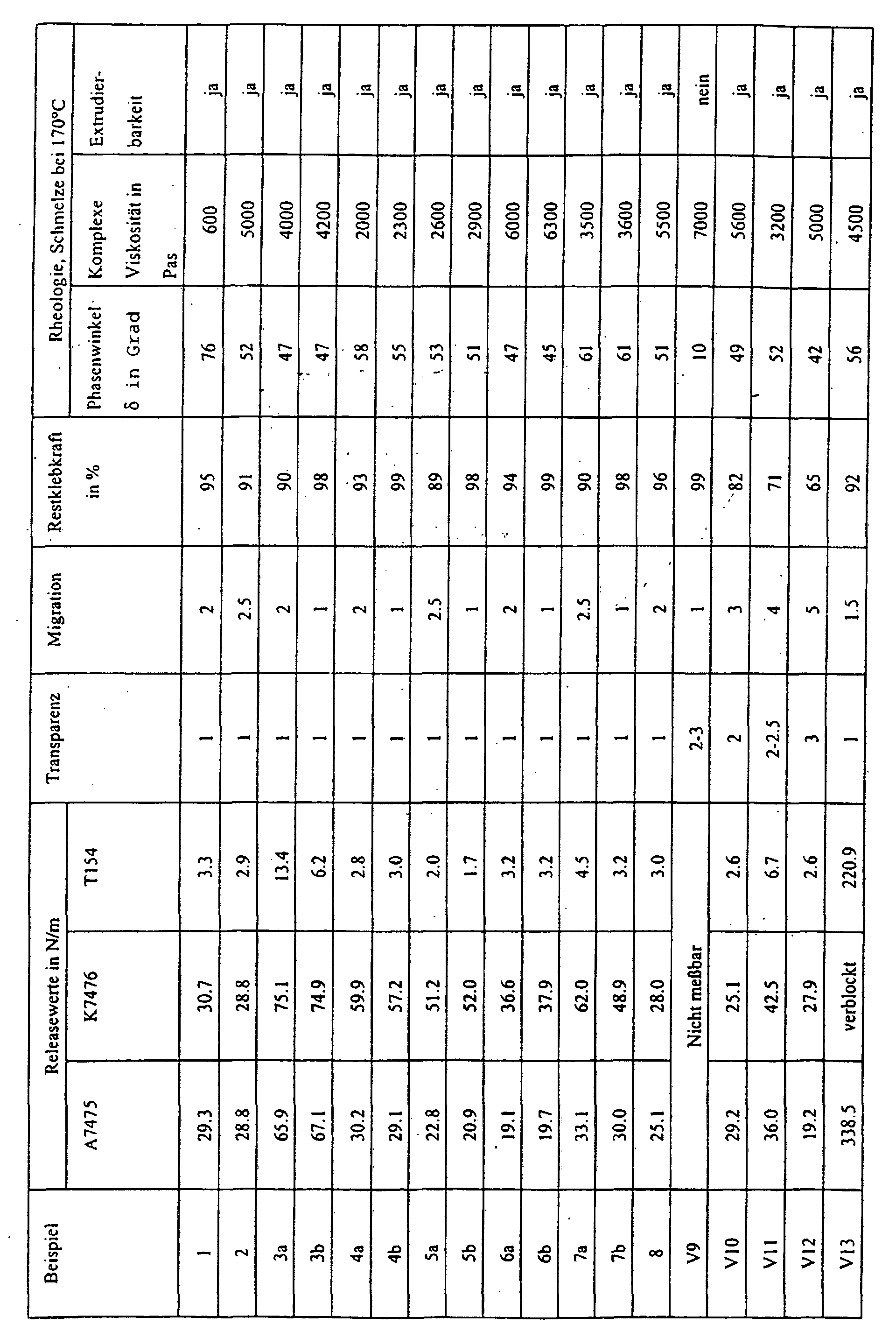

## Patentansprüche

1. Silikonorganocopolymere enthaltend
a) 30 bis 99 Gew.-%, bezogen auf das Gesamtgewicht der Komponenten a) und b), von einem oder mehreren Monomeren aus der Gruppe umfassend Vinylaromaten, Methacryl- oder Acrylsäureester von Alkoholen mit 1 bis 15 C-Atomen, Vinylester von unverzweigten oder verzweigten Alkylcarbonsäuren mit 1 bis 15 C-Atomen, Olefine, Diene, Vinylhalogenide
b) 1 bis 70 Gew.-%, bezogen auf das Gesamtgewicht der Komponenten a) und b), einer Silikonkomponente, die aus einer Mischung von mindestens zwei Diorganopolysiloxanen mit der allgemeinen Formel R¹ₐR₃₋ₐSiO(SiR₂O)ₙSiR₃₋ₐR¹ₐ besteht, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a gleich oder verschieden ist und 0 oder 1 bedeutet, wobei mindestens ein a gleich 1 ist, und n eine ganze Zahl ist, wobei
b1) 5 bis 65 Gew.-% der Silikonkomponente b) aus einem oder mehreren Diorganopolysiloxanen bestehen mit n ≤ 30 und nur einer endständigen polymerisierbaren Gruppe R¹, und
b2) 35 bis 95 Gew.-% der Silikonkomponente b) aus einem oder mehreren Diorganopolysiloxanen bestehen, mit n ≥ 55 und mit einer bis zwei endständigen polymerisierbaren Gruppen R¹.

2. Silikonorganocopolymere nach Anspruch 1, **dadurch gekennzeichnet, dass** als Komponente a) Homo- oder Mischpolymerisate von Styrol und von Methacrylsäureestern und Acrylsäureestern von Alkoholen mit 1 bis 15 C-Atomen enthalten sind.

3. Silikonorganocopolymere nach Anspruch 1 oder 2, **dadurch gekennzeichnet, dass** als polymerisierbare Gruppen R¹ Alkenylreste mit 2 bis 8 C-Atomen enthalten sind.

4. Silikonorganocopolymere nach Anspruch 1 bis 3, **dadurch gekennzeichnet, dass** als Silikon b) solche aus der Gruppe umfassend α,ω-Divinyl-Polydimethylsiloxane, α,ω-Di-(3-acryloxypropyl)-Polydimethylsiloxane, α,ω-Di-(3-methacryloxypropyl)-Polydimethylsiloxane, α,ω-Di-(acryloxymethyl)-Polydimethylsiloxane, α-Monovinyl-Polydimethylsiloxane, α-Mono-(3-acryloxypropyl)-Polydimethylsiloxane, α-Mono-(3-methacryloxypropyl)-Polydimethylsiloxane, α-Mono-(acryloxymethyl)-Polydimethylsiloxane, α-Mono-(methacryloxymethyl)-Polydimethylsiloxane) enthalten sind.

5. Silikonorganocopolymere nach Anspruch 1 bis 4, **dadurch gekennzeichnet, dass** Gemische von linearen oder verzweigten mono-(Meth)acryloxyalkyl-funktionellen Silikonen mit Kettenlänge ≤ 30 und linearen oder verzweigten mono-(Meth)-acryloxyalkyl-funktionellen Silikonen mit Kettenlänge ≥ 55, enthalten sind.

6. Verfahren zur Herstellung von Silikonorganocopolymere mittels radikälisch initiierter Polymerisation von
a) 30 bis 99 Gew.-%, bezogen auf das Gesamtgewicht der Komponenten a) und b), von einem oder mehreren Monomeren aus der Gruppe umfassend Vinylaromaten, Methacryl- oder Acrylsäureester von Alkoholen mit 1 bis 15 C-Atomen, Vinylester von unverzweigten oder verzweigten Alkylcarbonsäuren mit 1 bis 15 C-Atomen, Olefine, Diene, Vinylhalogenide, in Gegenwart von
b) 1 bis 70 Gew.-%, bezogen auf das Gesamtgewicht der Komponenten a) und b), einer Silikonkomponente, die aus einer Mischung von mindestens zwei Diorganopolysiloxanen mit der allgemeinen Formel R¹ₐR₃₋ₐSiO(SiR₂O)ₙSiR₃₋ₐR¹ₐ besteht, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a gleich oder verschieden ist und 0 oder 1 bedeutet, wobei mindestens ein a gleich 1 ist, und n eine ganze Zahl ist, wobei
b1) 5 bis 65 Gew.-% der Silikonkomponente b) aus einem oder mehreren Diorganopolysiloxanen bestehen mit n ≤ 30 und nur einer endständigen polymerisierbaren Gruppe R¹, und
b2) 35 bis 95 Gew.-% der Silikonkomponente b) aus einem oder mehreren Diorganopolysiloxanen bestehen, mit n ≥ 55 und mit einer bis zwei endständigen polymerisierbaren Gruppen R¹.

7. Verfahren nach Anspruch 6, **dadurch gekennzeichnet, dass** die Polymerisation mittels Substanzpolymerisation, Suspensionspolymerisation, Lösungspolymerisation oder Fällungspolymerisation durchgeführt wird.

8. Verfahren nach Anspruch 7, **dadurch gekennzeichnet, dass** bei der Suspensionspolymerisation bei unterschiedlichen Temperaturen polymerisiert wird, und gegebenenfalls eine Temperaturrampe gefahren wird.

9. Verfahren nach Anspruch 7, **dadurch gekennzeichnet, dass** bei der Lösungspolymerisation das Semibatch-Verfahren eingesetzt wird, wobei das Verhältnis Monomere a) und polymerisierbare Silikonkomponente b) zu jedem Zeitpunkt der Polymerisation annähernd konstant eingestellt wird, und gegebenenfalls gegen Ende der Polymerisation nochmals Initiator zugegeben wird, um das Copolymer durch Pfropfungsreaktionen zu modifizieren.

10. Verfahren nach Anspruch 6 bis 9, **dadurch gekennzeichnet, dass** das damit erhaltene Silikonorganocopolymer mit einem Lösungsmittel, bei dem die Löslichkeit des Silikonorganocopolymeren bei Normalbedingungen < 0.1 g auf 100 ml Lösungsmittel beträgt, und die Löslichkeit der Silikon-Komponente b) > 0.1 g auf 100 ml beträgt, gewaschen wird.

11. Verwendung der Silikonorganocopolymere aus Anspruch 1 bis 5 zur Herstellung von Schutzbeschichtungen bei Bauanwendungen.

12. Verwendung der Silikonorganocopolymere aus Anspruch 1 bis 5 zur Beschichtung von Textilien, Papier, Kunststofffolien und Metallen.

13. Verwendung der Silikonorganocopolymere aus Anspruch 1 bis 5 als Modifizierungs- und Hydrophobierungsmittel.

14. Verwendung der Silikonorganocopolymere aus Anspruch 1 bis 5 als Additiv für kosmetische Formulierungen.

15. Verwendung der Silikonorganocopolymere aus Anspruch 1 bis 5 zur Herstellung von Trennmitteln und abhäsiven Überzügen.

## Claims

1. Organic silicone copolymers comprising
a) from 30 to 99% by weight, based on the total weight of components a) and b), of one or more monomers from the group consisting of vinyl-aromatics, methacrylic or acrylic esters of alcohols having from 1 to 15 carbon atoms, vinyl esters of branched or unbranched alkylcarboxylic acids having from 1 to 15 carbon atoms, olefins, dienes, and vinyl halides
and
b) from 1 to 70% by weight, based on the total weight of components a) and b), of a silicone component composed of a mixture of at least two diorganopolysiloxanes having the general formula R¹ₐR₃₋ₐSiO(SiR₂O)ₙSiR₃₋ₐR¹ₐ, in which each R is identical or different and denotes a monovalent, optionally substituted, alkyl radical or alkoxy radical having in each case from 1 to 18 carbon atoms, R¹ denotes a polymerizable group, a is identical or different and denotes 0 or 1, at least one a being 1, and n is an integer, where
b1) from 5 to 65% by weight of the silicone component b) is composed of one or more diorganopolysiloxanes with n ≤ 30 and only one terminal polymerizable group R¹, and
b2) from 35 to 95% by weight of the silicone component b) is composed of one or more diorganopolysiloxanes with n ≥ 55 and with one or two terminal polymerizable groups R¹.

2. Copolymers according to Claim 1, **characterized in that** homopolymers or copolymers of styrene and of methacrylic esters and acrylic esters of alcohols having from 1 to 15 carbon atoms are present as component a).

3. Copolymers according to Claim 1 or 2, **characterized in that** alkenyl radicals having from 2 to 8 carbon atoms are present as polymerizable groups R¹.

4. Copolymers according to any of Claims 1 to 3, **characterized in that** silicones from the group consisting of α,ω-divinyl-polydimethylsiloxanes, α,ω-di(3-acryloyloxypropyl)-polydimethylsiloxanes, α,ω-di(3-methacryloyloxypropyl)-polydimethylsiloxanes, α,ω-di(acryloyloxymethyl)-polydimethylsiloxanes, α-monovinylpolydimethylsiloxanes, α-mono(3-acryloyloxypropyl)-polydimethylsiloxanes, α-mono(3-methacryloyloxypropyl)-polydimethylsiloxanes, α-mono(acryloyloxymethyl)-polydimethylsiloxanes, and α-mono(methacryloyloxymethyl)-polydimethylsiloxanes are present as silicone b).

5. Copolymers according to any of Claims 1 to 4, **characterized in that** mixtures of linear or branched mono(meth)acryloyloxyalkyl-functional silicones with a chain length ≤ 30 and linear or branched mono(meth)acryloyloxyalkyl-functional silicones with a chain length ≥ 55 are present.

6. Process for preparing organic silicone copolymers by free-radically initiated polymerization of
a) from 30 to 99% by weight, based on the total weight of components a) and b), of one or more monomers from the group consisting of vinyl-aromatics, methacrylic or acrylic esters of alcohols having from 1 to 15 carbon atoms, vinyl esters of branched or unbranched alkylcarboxylic acids having from 1 to 15 carbon atoms, olefins, dienes, and vinyl halides in the presence of
b) from 1 to 70% by weight, based on the total weight of components a) and b), of a silicone component composed of a mixture of at least two diorganopolysiloxanes having the general formula R¹ₐR₃₋ₐSiO (SiR₂O)ₙSiR₃₋ₐR¹ₐ, in which each R is identical or different and denotes a monovalent, optionally substituted, alkyl radical or alkoxy radical having in each case from 1 to 18 carbon atoms, R¹ denotes a polymerizable group, a is identical or different and denotes 0 or 1, at least one a being 1, and n is an integer, where
b1) from 5 to 65% by weight of the silicone component b) is composed of one or more diorganopolysiloxanes with n ≤ 30 and only one terminal polymerizable group R¹, and
b2) from 35 to 95% by weight of the silicone component b) is composed of one or more diorganopolysiloxanes with n ≥ 55 and with one or two terminal polymerizable groups R¹.

7. Process according to Claim 6, **characterized in that** the polymerization is carried out by means of bulk polymerization, suspension polymerization, solution polymerization or precipitation polymerization.

8. Process according to Claim 7, **characterized in that** suspension polymerization is carried out at different temperatures and if desired a temperature ramp is operated.

9. Process according to Claim 7, **characterized in that** solution polymerization is carried out using the semibatch process, the ratio of monomers a) to polymerizable silicone component b) being set to be approximately constant at any given point in time of the polymerization, and towards the end of the polymerization further initiator being added in order to modify the copolymer by means of grafting reactions.

10. Process according to any of Claims 6 to 9, **characterized in that** the organic silicone copolymer obtained thereby is washed with a solvent in respect of which the solubility of the organic silicone copolymer under standard conditions is < 0.1 g per 100 ml of solvent and the solubility of the silicone component b) is > 0.1 g per 100 ml.

11. Use of a copolymer from any of Claims 1 to 5 to produce protective coatings in the context of construction applications.

12. Use of a copolymer from any of Claims 1 to 5 to coat textiles, paper, polymer fims and metals.

13. Use of a copolymer from any of Claims 1 to 5 as modifiers and water repellents.

14. Use of a copolymer from any of Claims 1 to 5 as additives to cosmetic formulations.

15. Use of a copolymer from any of Claims 1 to 5 to produce release agents and abhesive coatings.

## Revendications

1. Copolymères organosiliconés contenant
a) 30 à 99% en poids, par rapport au poids total des composants a) et b), d'un ou de plusieurs monomères du groupe comprenant les aromatiques de vinyle, les esters d'acide méthacrylique ou acrylique d'alcools ayant 1 à 15 atomes de carbone, les esters vinyliques d'acides alkylcarboxyliques non ramifiés ou ramifiés ayant 1 à 15 atomes de carbone, les oléfines, les diènes, les halogénures de vinyle,
b) 1 à 70% en poids, par rapport au poids total des composants a) et b), d'un composant siliconé, constitué d'un mélange d'au moins deux diorganopolysiloxanes de formule générale R¹ₐR₃₋ₐSiO(SiR₂O)ₙSiR₃₋ₐR¹ₐ, R étant identique ou différent, et signifiant un radical alkyle ou alcoxy monovalent, le cas échéant substitué, ayant à chaque fois 1 à 18 atomes de carbone, R¹ signifiant un groupe polymérisable, a étant identique ou différent et signifiant 0 ou 1, au moins un a valant 1, et n étant un nombre entier, où
b1) 5 à 65% en poids du composant siliconé b) sont constitués d'un ou de plusieurs diorganopolysiloxanes avec n ≤ 30 et seulement un groupe R¹ terminal polymérisable, et
b2) 35 à 95% en poids du composant siliconé b) sont constitués d'un ou plusieurs diorganopolysiloxanes, avec n ≥ 55 et avec un à deux groupes R¹ terminaux polymérisables.

2. Polymères organosiliconés selon la revendication 1, **caractérisés en ce que** sont contenus, en tant que composant a), des homopolymères ou des copolymères de styrène et d'esters d'acide méthacrylique et d'esters d'acide acrylique d'alcools ayant 1 à 15 atomes de carbone.

3. Polymères organosiliconés selon la revendication 1 ou 2, **caractérisés en ce que** sont contenus des radicaux alcényle ayant 2 à 8 atomes de carbone en tant que groupes polymérisables R¹.

4. Polymères organosiliconés selon les revendications 1 à 3, **caractérisés en ce que** sont contenus en tant que silicone b) ceux du groupe comprenant les α,ω-divinylpolydiméthylsiloxanes, les α,ω-di(3-acryloxypropyl)polydiméthylsiloxanes, les α,ω-di(3-méthacryloxypropyl)polydiméthylsiloxanes, les α,ω-di(acryloxyméthyl)polydiméthylsiloxanes, les α-monovinylpolydiméthylsiloxanes, les α-mono(3-acryloxypropyl)polydiméthylsiloxanes, les α-mono(3-méthacryloxypropyl)polydiméthylsiloxanes, les α-mono(acryloxyméthyl)polydiméthylsiloxanes, les α-mono(méthacryloxyméthyl)polydiméthylsiloxanes.

5. Polymères organosiliconés selon les revendications 1 à 4, **caractérisés en ce que** sont contenus des mélanges de silicones à fonctionnalité mono(méth)acryloxyalkyle linéaires ou ramifiés d'une longueur de chaîne ≤ 30 et de silicones à fonctionnalité mono(méth)acryloxyalkyle linéaires ou ramifiés d'une longueur de chaîne ≥ 55.

6. Procédé pour la préparation de polymères organosiliconés au moyen d'une polymérisation amorcée radicalairement de
a) 30 à 99% en poids, par rapport au poids total des composants a) et b), d'un ou de plusieurs monomères du groupe comprenant les aromatiques de vinyle, les esters d'acide méthacrylique ou acrylique d'alcools ayant 1 à 15 atomes de carbone, les esters vinyliques d'acides alkylcarboxyliques non ramifiés ou ramifiés ayant 1 à 15 atomes de carbone, les oléfines, les diènes, les halogénures de vinyle, en présence de
b) 1 à 70% en poids, par rapport au poids total des composants a) et b), d'un composant siliconé, constitué d'un mélange d'au moins deux diorganopolysiloxanes de formule générale R¹ₐR₃₋ₐSiO(SiR₂O)ₙSiR₃₋ₐR¹ₐ, R étant identique ou différent, et signifiant un radical alkyle ou alcoxy monovalent, le cas échéant substitué, ayant à chaque fois 1 à 18 atomes de carbone, R¹ signifiant un groupe polymérisable, a étant identique ou différent et signifiant 0 ou 1, au moins un a valant 1, et n étant un nombre entier, où
b1) 5 à 65% en poids du composant siliconé b) sont constitués d'un ou de plusieurs diorganopolysiloxanes avec n ≤ 30 et seulement un groupe R¹ terminal polymérisable, et
b2) 35 à 95% en poids du composant siliconé b) sont constitués d'un ou plusieurs diorganopolysiloxanes, avec n ≥ 55 et avec un à deux groupes R¹ terminaux polymérisables.

7. Procédé selon la revendication 6, **caractérisé en ce que** la polymérisation est réalisée au moyen d'une polymérisation en masse, d'une polymérisation en suspension, d'une polymérisation en solution ou d'une polymérisation par précipitation.

8. Procédé selon la revendication 7, **caractérisé en ce que** dans le cas d'une polymérisation en suspension, on polymérise à différentes températures, et le cas échéant, on utilise une rampe de températures.

9. Procédé selon la revendication 7, **caractérisé en ce que** dans le cas de la polymérisation en solution, on utilise le procédé semi-continu, le rapport monomères a) à composant siliconé polymérisable b) étant réglé à une valeur presque constante à chaque instant de la polymérisation, et le cas échéant un amorceur étant à nouveau ajouté à la fin de la polymérisation afin de modifier le copolymère par des réactions de greffage.

10. Procédé selon les revendications 6 à 9, **caractérisé en ce que** le copolymère organosiliconé ainsi obtenu est lavé avec un solvant dans lequel la solubilité du copolymère organosiliconé est < 0,1 g par 100 ml de solvant dans des conditions normales et la solubilité du composant siliconé b) est > 0,1 g par 100 ml.

11. Utilisation des copolymères organosiliconés des revendications 1 à 5 pour la préparation de couches de protection dans des applications dans le domaine de la construction.

12. Utilisation des copolymères organosiliconés des revendications 1 à 5 pour le revêtement de textiles, de papier, de feuilles en matière synthétique et de métaux.

13. Utilisation des copolymères organosiliconés des revendications 1 à 5 comme agent modificateur ou hydrofuge.

14. Utilisation des copolymères organosiliconés des revendications 1 à 5 comme additif pour formulations cosmétiques.

15. Utilisation des copolymères organosiliconés des revendications 1 à 5 pour la préparation d'agents séparateurs et d'enduits anti-adhésifs.
